# EUROPEAN PATENT APPLICATION

(11) **EP 1 995 989 A2**
(43) Date of publication of application: **26.11.2008**
(21) Application number: 08251837.4
(22) Date of filing: 27.05.2008
(51) Int. Cl.: H04R 5/04

(54) **Connection device**

(30) Priority: 24.05.2007 GB 0709923
(71) Applicant: Armour Automotive Ltd, Bordon Hampshire GU35 9QE (GB)
(72) Inventor: Chan, Tat-chi, c/o Armour Automotive Ltd, Bordon, Hampshire GU35 9QE (GB)
(74) Representative: Wood, Graham

(57) **Abstract**

A connection device (2) with a circuit (4) and connection means (6) for connecting the circuit intermediate the audio generation source (8) and loudspeakers (14) of a vehicle's audio system, wherein the circuit (4) includes communication means (20) to allow a range of audio devices (18) to be connected thereto, such that audio therefrom is output from one or more loudspeakers (14).

## Description

The invention to which this application relates is to a connection device for media systems in a vehicle, although it will be appreciated by persons skilled in the art that the present invention could also be used in non-vehicular applications.

In a vehicle such as a modern car, the dashboard and car interior are highly integrated. As such, if a user wishes to add an additional component such as an MP3 player to make use of the speakers of the car's existing audio system, it can be difficult as firstly access to the system in the dashboard has to be gained for installation, which is time-consuming, and secondly the existing audio system may be provided with no or non-standard connectors.

Replacing the radio head unit changes the appearance of the dashboard and the replaced head unit is usually wasted. Hardwiring is labour intensive and prone to problems. In addition it is usually intended to add only one additional source and thus audio source diversity is somewhat limited.

A number of conventional methods are available for adding further components to an existing audio system without dismantling the dashboard. For example, it is possible to provide an FM modulator to an audio device to transmit audio therefrom to the existing system. However, this does not produce satisfactory sound quality due to use of existing wavelengths, and some interference to normal FM radio is likely.

In addition, if the user then wishes to add a further component to the car's existing audio system, such as a hands-free system for a telephone, the time-consuming installation procedure has to be repeated. Furthermore, if the existing system does not have enough connectors the user may have to remove the MP3 player to allow the telephone system to be connected. Clearly this restricts choice to the user if only one additional device can be connected to the existing system at a particular time.

Furthermore car audio is typically a multiple-source-to-one-sink type of system, in other words audio is output in a single predetermined fashion (e.g. to loudspeakers), albeit from several input formats (e.g. CD/radio/etc).

In a conventional system means of audio selection is normally provided in the form of a selector switch, or by priority being given to any external device connected thereto. However, such priority is given to an external source even if there is no audio content. Conventional systems thus do not resolve audio source priority satisfactorily.

An aim of the present invention is to provide a device to allow a range of audio devices to be used in conjunction, such as within a vehicle and furthermore to allow devices provided externally and separately from the vehicle to be used effectively in conjunction with the existing audio system of a vehicle and in a manner which is user friendly in terms of both installation and subsequent use.

In a first aspect of the invention, there is provided a connection device comprising:
a circuit;
connection means;
communication means to allow at least one audio device to be connected to the circuit;
characterised in that the connection means can be connected intermediate an audio generation source and at least one loudspeaker such that audio from the at least one audio device is output from at least one loudspeaker.

Preferably the circuit is provided with one or more audio amplifiers for driving the loudspeakers. Thus a signal from the audio device bypasses the amplifier of the audio generation source resulting in the audio device providing the signal directly to the loudspeakers.

In one embodiment the circuit is prioritised over the audio source for outputting audio to the loudspeakers. This allows the loudspeakers to be taken over by the audio. In one embodiment a priority scheme can be incorporated so that operation of the system is more satisfactory than conventional systems. This scheme is referred to as audio source priority resolution (ASPR) hereunder.

Typically the loudspeakers are provided as an integral part of a vehicle audio system. Typically the audio system has been installed as an integral part of the vehicle infrastructure.

In one embodiment the audio generation source is provided separately from the vehicle.

Thus once the connection device is fitted to a vehicle, no further time-consuming installations are required to connect additional audio devices to the car's existing audio system, as the circuit's standardised communication means allow a range of audio devices to be connected thereto directly. In addition, the number of devices that can be easily connected to the car's existing audio system is increased. The audio source is selected by simply physically plugging in the source signal into the connection device, or by establishing a wireless link to an integral subsystem of the connection device.

In one embodiment the communication means includes any or any combination of standard external connectors, Bluetooth receivers, radio receivers, and/or the like. Thus the connection device can be fitted entirely behind the car dashboard and audio devices can be connected thereto by a wireless communication means such as Bluetooth. The connection device thus effectively acts as an integrated device.

In one embodiment the audio devices include any or any combination of MP3 players, mobile telephones, PDAs, gaming machines, and/or the like. Typically the output from such audio devices is considered unamplified i.e. not suitable for driving loudspeakers to produce a satisfactory audio decibel level.

In one embodiment the output to one or more of the loudspeakers from the audio generation source is reduced or muted when an audio device is connected to the circuit and operable to generate audio to the connection device.

In one embodiment the audio from the audio devices is output to one or more of the loudspeakers selectively. In one embodiment when the connection device is connected to a four speaker system with output from the car's existing audio system, and an audio device is connected thereto, the audio of two of the speakers on the driver's side can be muted from the car's existing audio system and replaced with audio output derived from the audio device, and the audio of the passenger side can be reduced. The effect is that the driver can listen to the audio from the connected audio device while the passenger can still hear the output from the car's existing audio system. This is of use when for example a traffic report is playing on the existing system and the driver receives a telephone call, as the passenger can continue to listen to the traffic report while the driver answers the call. Thus this invention has the provision for a multiple-source-to-multiple-sink type of audio system.

In one embodiment the connection device also connects the at least one audio generation source directly to one or more loudspeakers. Thus some of the signals from the audio generation source are routed through the circuit, while others are passed directly to the loudspeakers.

Typically the circuit is provided with one or more class D audio amplifiers for driving the loudspeakers. This is useful as most audio devices are not provided with suitable amplifiers and it is not normally possible to access the amplifier of the existing audio system. Class D amplifiers produce little heat, are energy efficient, and are small enough to fit behind the dashboard of a vehicle.

In one embodiment, the output to at least one of the loudspeakers is automatically switched from the audio generation source to the audio device on connection of the audio device to the connection device or, more likely detection of audio being generated from the audio device. Thus when receiving a telephone call for example, the circuit automatically switches over to the telephone on answering such that the user can hear the caller through the car's existing audio system. When the user hangs up the output is switched back to the original audio generation source in the car, or whichever device was providing audio output prior to the call.

In one embodiment the circuit is provided with an audio signal level sensing (ASLS) portion to facilitate the automatic switching on connection of an audio device thereto.

In one embodiment a priority scheme (ASPR) is provided whereby the audio signal of one or more audio devices may be prioritised over that of the audio source. Thus audio signal routing is prioritised in an automated and a well-defined manner.

For example when the connection device is used to connect up a satellite navigation device to an existing audio system, the priority scheme prioritises the signal from the satellite navigation such that when voice navigation speech is present that this speech is automatically fed through the loudspeakers. Typically duration of this speech audio signal is very short but the nature of the information it may convey is very important. In this embodiment, the main audio source takes up most of the airtime while the higher priority but relatively infrequent voice navigation speech cuts in on-demand.

As the priority scheme has a finite response time, it may cut off the start of the audio signal. As such, in one embodiment the priority scheme allows the signal from the audio device to be delayed.

The circuit is provided with an audio delay such that the finite response time of ASPR is compensated by delaying the audio signal to the speaker output which feature is named Mute Precedes Audio (MPA). With MPA timing of audio content such as voice navigation speech will align perfectly with audio source switching. Thus, "Take the right exit at the next junction" would not become "ake the right exit at the next junction".

In one embodiment the device utilises a combination of MPA and ASLS to provide for an automatic and complete audio source priority resolution (ASPR) scheme. ASPR provides for ad hoc or on-the-fly switching of audio source regardless of connection status. Audio source selection is based simply on the presence or absence of audio content. MPA provides a perfect time alignment of source switching. Thus there is provided a much higher degree of integration, and a much more streamlined and transparent operation.

In one embodiment the circuit is provided with a ground loop isolator portion to prevent noise interference to the audio output. In particular this prevents alternator interference from the power supply of the vehicle.

In one embodiment the circuit is provided with control means to adjust the audio output. Typically the control means allow adjustment of any or any combination of volume, bass, treble, balance, fade, and/or the like.

In a further aspect of the invention, there is provided a vehicle audio system comprising:
at least one audio generation source;
said at least one audio generation source connected to one or more loudspeakers;
connection means for connecting a circuit intermediate the at least one audio generation source and one or more loudspeakers;
said circuit including an input for receiving an input audio signal from the at least one audio generation source, and an output for supplying an output audio signal to one or more of the loudspeakers connectable thereto;
characterised in that the circuit includes one or more communication means to allow one or more of a range of audio devices to be connected thereto, such that audio therefrom is output from one or more loudspeakers.

In a yet further aspect of the invention, there is provided a method of fitting a connection device to a vehicle audio system, said vehicle audio system including at least one audio generation source connected to one or more loudspeakers;
fitting connection means intermediate the at least one audio generation source and one or more loudspeakers;
connecting a circuit to the connection means, said circuit including an input for receiving an input audio signal from the at least one audio generation source, and an output for supplying an output audio signal to one or more of the loudspeakers connected thereto;
characterised in that the circuit includes one or more communication means to allow one or more of a range of audio devices to be connected thereto, such that audio therefrom is output from one or more loudspeakers.

Typically the connection device is retrofitted to an existing audio system in a vehicle.

Specific embodiments of the invention are now described wherein:-
Figure 1 illustrates a schematic layout of a connection device in relation to an existing vehicular audio system.
Figure 2 illustrates a schematic layout of a connection device in relation to an existing vehicular audio system.

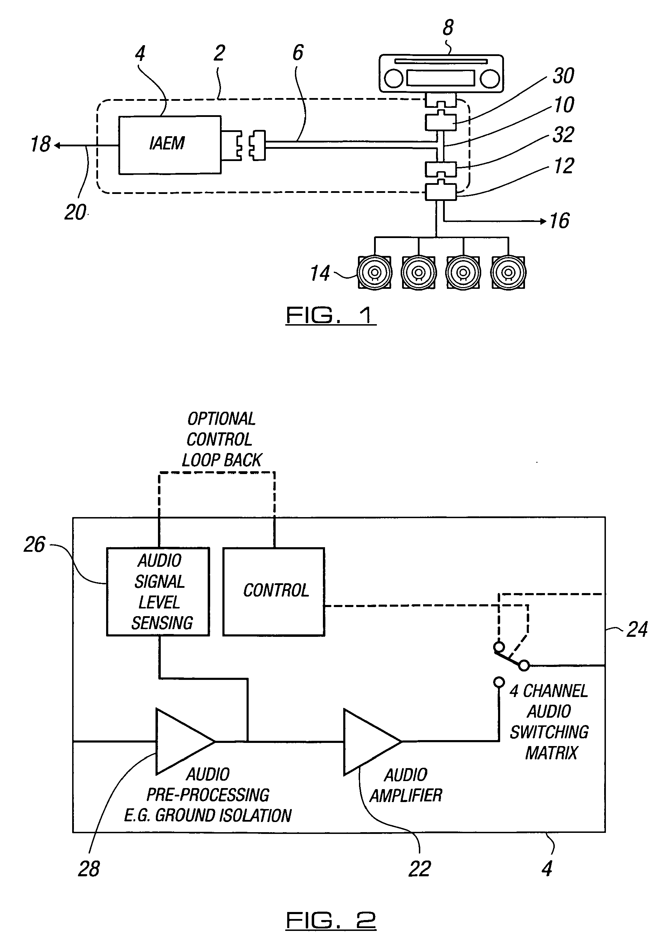

With reference to Figure 1, there is illustrated a connection device 2, as indicated with dotted lines, comprising a circuit 4 and communication means 6.

The connection device 2 is known as 10 Connect, and is simple to install in a vehicle 16 with an existing audio generation source 8 and loudspeakers 14.

Wiring to the head-unit 8, i.e. the radio/CD player of the existing audio system of the vehicle or other audio generation source, is unplugged and re-routed to the circuit 4, also known as the 10 Connect electronic module (IOEM).

The 10 Connect 2 acts as an audio signal router system. Wiring from the IOEM is then connected back to the head-unit thus completing the circuit. The installation allows for the audio signal from the head-unit to be routed via the IO Connect. Other signals are by-passed using straight-feed wires 10.

Different vehicles and different types of head-unit will have different plugs 12. The 10 Connect kit is supplied with connection means 6 in the form of a standard ISO connector. Where necessary matching wiring loom set with specific Sound-On-Top (SOT) leads can be sourced separately. The connection means 6 thus provides an input to the circuit for receiving an input audio signal from the head-unit via plug 30, and an output for supplying an output audio signal to the loudspeakers 14 via plug 32. Installation therefore simply consists of plugging the 10 Connect into the system. The 10 Connect becomes part of the audio system and is totally transparent to the vehicle occupant and user.

An audio device 18 such as an MP3 player can then be connected to the circuit using wireless communication means 20 such as Bluetooth, such that the audio output therefrom is heard via the loudspeakers 14. Of course other communication means could be used, such as standard 3.5mm jack plugs and sockets.

Thus the connection device provides standardised communication means to allow a range of audio devices to be connected thereto and the output therefrom to be routed to the car's existing audio system.

With reference to Figure 2, the 10 Connect electronic module 4 has a class-D audio amplifier 22 on it that is capable of driving regular loudspeakers to produce quality sound. It has also on it a switcher matrix 24. Where demand is present, audio from the host head-unit 8 is switched out and audio from the 10 Connect on-board class-D audio amplifier 22 is switched in and is audible through the loudspeaker system of the vehicle, which usually comprises the original equipment loudspeakers 14, and thus installation of additional loudspeakers is not required. It will be appreciated that other types of amplifier could be used for a similar effect. The amplifier allows line-level devices to be heard via the vehicle's speaker system.

By switching audio in and out this way, the sound appears to the listener to come from the same place all the time, and this approach thus provides the feel of a truly integrated system. In addition, this approach results in less noise than existing integrated solutions which rely on FM modulation for communication, and as such tend to have hiss, lack HiFi and remove a range of wavelengths from the bandwidth. In addition, the audio signal does not have to be routed through the amplifier of the existing head-unit

The IOEM also includes a ground loop isolator chip 28 to isolate the speaker and power ground and thus prevent alternator interference from the power supply of the vehicle.

An additional feature that can be integrated into the IO Connect electronic module is an audio signal level sensing (ASLS) circuit 26. The ASLS function can be selected or deselected. When ASLS is selected, the IO Connect will automatically switch out audio from the head-unit 8 and output audio from the class-D amplifier 22 to the loudspeakers 14. Thus, an audio device 18 fed through the 10 Connect 2 will have priority over the sound from the head-unit 8 using this arrangement. For example, if an MP3 music device is connected to the 10 Connect, no sound source select button is required. One needs only to play the music to activate the audio feedthrough.

When ASLS is deselected, the IOEM 4 is still capable of receiving a mute signal from an external audio device. This mute signal is, but is not limited to, a "short to ground" active low signal usually generated by an N-channel transistor that is either an unipolar N-channel FET transistor or a bipolar NPN transistor, connected in an open-collector configuration. In this configuration, the presence of the mute signal activates the IOEM 4 to switch in audio from this external audio device. By using the mechanism provided by ASLS or mute wire, external audio coming into the IOEM obtains priority so that it can be fed through to the loudspeakers in the desirable manner.

ASLS is not just a useful feature in resolving sound source priority automatically. It is very useful in terms of application. For example, the now ubiquitous Satellite Navigation device (SatNav) can be integrated into the car audio system using IO Connect.

SatNav devices usually provide a voice navigation feature. When approaching a road junction, a voice is generated by the device preparing the vehicle driver of route information. An example of a voice navigation speech is "In 300 yards, take the exit to the right".

When the navigation device is connected to an audio system that is enabled by the IO Connect, there are three marked benefits. Firstly, since the sound is diverted by the IO Connect through the in-built loudspeakers 14 of the vehicle, the sound quality is superior. Voice navigation speech is much more audible and is natural, loud and clear. Secondly, since the IO Connect will temporarily switch off (out) audio from the head-unit 8, the driver need not concentrate as hard to listen to the voice instructions. Research has shown that a person can only concentrate on a limited number of things at a time, so this feature potentially enhances overall road safety. Drivers who are on an unfamiliar road require more concentration on the road as well as clear road directions at the same time. The IO Connect system enhances both. Thirdly, when the 10 Connect is connected to a wireless audio link such as a Bluetooth device, it forms a completely integrated auxiliary sound system. Priority (ASPR) is automatically assigned to the Bluetooth sound source whenever audio is available, for example, through A2DP streaming.

The 10 Connect system can have different configurations. One possible configuration is Bluetooth enabled in which a Bluetooth module is incorporated into the 10 Connect system. This module is known as "BlueArm". When combined with 10 Connect, this may be called the "IO Play" set. In a further embodiment BlueArm and 10 Connect may be integrated into a single 10 Play module.

The BlueArm module will have a number of features. These are, but not limited to, A2DP audio streaming and (mobile) telephone call handling. The A2DP Bluetooth profile on BlueArm allows for Bluetooth devices to stream high quality audio for playing back through the loudspeakers on the host vehicle via the 10 Connect system. Nowadays more and more mobile phones, SatNav units, MP3 players and other audio-video device are A2DP capable.

When combined together, IO Connect and BlueArm also act as a fully integrated, fully transparent in-car telephone handsfree kit, which can operate as follows. When the host vehicle is stationary and safe, occupants pair up and connect their Bluetooth device with BlueArm. Pairing up, connecting and disconnecting between Bluetooth device and BlueArm is possible at anytime including during the duration of the journey, although it is usually done before the vehicle begins a journey in the interests of road safety.

BlueArm provides the user with a means of input for control, which is not limited to using buttons. The input device can be installed in a selected and fixed location in the vehicle cabin which is usually an easily accessible position. The driver can answer or reject an incoming call by, for example, pushing the correct button. It is now illegal to directly operate the mobile phone handset whilst driving in the UK and in many countries. BlueArm provides just the solution. In addition, BlueArm will also provide a microphone to be installed in a selected and fixed location in the host vehicle. This microphone, the input device, and the 10 Connect system in general, form a totally integrated Bluetooth handsfree kit.

For vehicles fitted with steering wheel telephone control buttons, the BlueArm module will be able to fully utilize this feature. An adaptor module will interface the BlueArm to steering wheel control. The user can use the buttons or other means of control on the steering wheel to, for example, answer or reject incoming telephone calls. This feature is not limited to steering wheel control, but it is generally possible to interface all types of telephone control command that is available on the host vehicle using the same approach. Examples are voice activation, rotary dial control and steering wheel stalk control.

In a similar manner, it is also possible that other forms of control on the vehicle can interface with the IO Connect system. Examples are steering wheel volume control and mode select button.

It will be appreciated that a dealership can fit the device for a user, but in either case the dashboard only has to be removed once to retrofit the IO Connect system to the vehicles existing audio system, and thereafter a range of audio devices can be connected thereto via standardised communication means.

It will be appreciated by persons skilled in the art that the present invention may also include further additional modifications made to the device which does not affect the overall functioning of the device.

## Claims

1. A connection device (2) comprising:
a circuit (4);
connection means (6);
communication means (20) to allow at least one audio device (18) to be connected to the circuit (4);
**characterised in that** the connection means (20) can be connected intermediate an audio generation source (8) and at least one loudspeaker (14) such that audio from the at least one audio device (18) is output from at least one loudspeaker (14).

2. A connection device according to claim 1 wherein the output to one or more of the loudspeakers from the audio generation source is reduced or muted when an audio device is connected to the circuit or audio is generated from the audio device.

3. A connection device according to claim 1 wherein the output to one or more of the loudspeakers is automatically switched from the audio generation source to the audio device on connection of the audio device to the connection device, or detection of audio being generated from the audio device.

4. A connection device according to any preceding claim wherein the circuit prioritises the audio signal of one or more audio devices over that of the audio source.

5. A connection device according to claim 4 wherein the circuit delays the output of the prioritised audio signal to the loudspeakers to compensate for the prioritisation response time.

6. A connection device according to any preceding claim wherein the audio generation source and/or loudspeakers are provided as part of a vehicle audio system installed as an integral part of the vehicle infrastructure.

7. A connection device according to any preceding claim wherein the audio from the audio devices is output to one or more of the loudspeakers selectively.

8. A connection device according to any preceding claim wherein the connection means provides a direct connection between the audio generation source and one or more loudspeakers.

9. A connection device according to any preceding claim wherein the circuit is provided with one or more class D audio amplifiers for driving the loudspeakers.

10. A connection device according to any preceding claim wherein the circuit is provided with a ground loop isolator portion to prevent noise interference to the audio output.

11. A vehicle audio system comprising:
at least one audio generation source (8);
said at least one audio generation source (8) connected to one or more loudspeakers (14);
connection means (6) for connecting a circuit (4) intermediate the at least one audio generation source (8) and one or more loudspeakers (14);
said circuit (4) including an input for receiving an input audio signal from the at least one audio generation source (8), and an output for supplying an output audio signal to one or more of the loudspeakers (14) connectable thereto;
**characterised in that** the circuit (4) includes one or more communication means (20) to allow one or more of a range of audio devices (18) to be connected thereto, such that audio therefrom is output from one or more loudspeakers (14).

12. A method of fitting a connection device (2) to a vehicle audio system, said vehicle audio system including at least one audio generation source (8) connected to one or more loudspeakers (14);
fitting connection means (6) intermediate the at least one audio generation source (8) and one or more loudspeakers (14);
connecting a circuit (4) to the connection means (6), said circuit including an input for receiving an input audio signal from the at least one audio generation source (8), and an output for supplying an output audio signal to one or more of the loudspeakers connected thereto (14);
**characterised in that** the circuit (4) includes one or more communication means (20) to allow one or more of a range of audio devices (18) to be connected thereto, such that audio therefrom is output from one or more loudspeakers (14).

13. A method according to claim 12 wherein the connection device is retrofitted to an existing audio system in a vehicle.
